# EUROPEAN PATENT APPLICATION

(11) **EP 4 265 571 A1**
(43) Date of publication of application: **25.10.2023**
(21) Application number: 22382359.2
(22) Date of filing: 18.04.2022
(51) Int. Cl.: C02F 1/461, C02F 1/463, C02F 1/467, C02F 103/22

(54) **ELECTROCHEMICAL DEVICE AND METHOD FOR WASTEWATER TREATMENT**

(71) Applicant: Inserpyme Global, S.A., 36400 Porriño - Pontevedra (ES)
(72) Inventor: NÓVOA RODRÍGUEZ, Xosé Ramón, 36310 Vigo (ES); SILVA FERNÁNDEZ, Sheila, 36310 Vigo (ES)
(74) Representative: ABG Intellectual Property Law, S.L.

(57) **Abstract**

The present invention refers to a device and a method for reducing the contaminants of an aqueous liquid such as wastewater and to the use of the device to treat an aqueous liquid.

## Description

### TECHNICAL FIELD OF THE INVENTION

The present invention may be encompassed within the field of treatment of aqueous liquids comprising contaminants such as wastewater. More particularly, it relates to a device and a method for the treatment of wastewater or any other aqueous media polluted, notably with organics, by electrochemical methods.

### BACKGROUND OF THE INVENTION

Electrochemical treatments for water treatment were first employed in the XIX century and their use declined along the XX century, being replaced by chemical treatments. The resurgence of electrochemical treatments in the late 1990s, mainly linked to the cost of electricity and to environmental concerns, make this field very dynamic in recent years. The electrochemical treatments require no added chemicals which make them very attractive from the environmental standpoint.

Since the pioneering work of Comninellis in 1994 (Christos Comninellis, Electrochimica Acta. Vol. 39, No. 11/12, pp. 1857-1862, 1994) the mechanism of anodic oxidation of organic contaminants and the conditions for producing oxygen-containing reactive species responsible for the oxidation process (typically O₂, H₂O₂ and •OH) started to be defined. However, oxidation process, although relevant in water treatment, usually needs to be integrated in a series of separation processes in which flocculation is a key aspect. Flocculation can be achieved electrochemically by dissolving active materials as iron or aluminium.

Some developments integrate a series of unit operations involving electrooxidation and electrofloculation processes. Patent document EP2448868A1 describes an apparatus comprising two different units: an electro-coagulation unit for removing contaminants with at least one anode and at least one cathode and an electro-oxidation unit for oxidizing contaminants.

Other developments perform electrooxidation and electrofloculation in one step. For example, Esfandyari, Y. et al. (Esfandyari, Y. et al. Environ Sci Pollut Res 22, 6288-6297 (2015)) described an electrochemical cell with three aluminium plates placed between pairs of a RuO₂/Ti anode and a stainless steel (SS) cathode and wherein only two pairs of plates were connected to a power supply. Nevertheless, this system has to work at acidic pH to avoid passivation of the aluminium plates, which means a previous step of pH adjustment. Moreover, in this method, an additional chemical agent such as H₂O₂ has to be added for the formation of hydroxyl radicals.

Despite the above developments, there is still a need in the state of the art for new compact systems that allow treating contaminated liquids comprising water such as organic wastewater in a simple and cost-effective way.

### BRIEF DESCRIPTION OF THE INVENTION

Described herein is a device and a method of using the same for the electrochemical treatment of an aqueous liquid comprising contaminants such as wastewater. The device of the invention allows performing oxidation and coagulation at the same time. In addition, the device of the present invention permits treating wastewater or any other contaminated aqueous media directly in storage or decantation tanks. Moreover, the design of the device of the present invention allows its advantageous arrangement in a compact configuration.

Thus, in a first aspect, the invention is directed to a device comprising:
- a first anode comprising a sacrificial-electrode material and a second anode comprising a dimensionally stable material, wherein the first and second anodes are coplanar;
- a cathode;
- projection means configured for projecting a liquid jet towards the first anode surface; and
- connection means configured for electrically connecting the two anodes and the cathode to a power source.

The use of projection means configured for projecting a liquid jet towards the first anode surface in the device of the present invention allows a cleaner surface of the first anode surface (sacrificial anode) and therefore reduces the treatment time and the associated costs.

In addition, the coplanar disposition of the first and the second anodes facilitates the coagulation and increases the amount of the oxidation of the organic matter in the liquid to treat, if present.

A second aspect of the invention is directed to a method for reducing the contaminants of an aqueous liquid comprising the following steps:
(i) providing
   - the device of the invention in any of its particular embodiments; and
   - an aqueous liquid comprising contaminants;
(ii) measuring the conductivity of the aqueous liquid comprising contaminants, and if necessary, adjusting the conductivity value to be over 1.5 mS/cm;
(iii) contacting the anodes and the cathode of the device of step (i) with the aqueous liquid comprising contaminants of step (i), and
   applying an electrical current between the anodes and the cathode of the device while projecting said liquid as a jet towards the sacrificial-electrode material anode planar surface of the device, during at least a period of time calculated by dividing the volume of liquid to be treated between the jet flow rate used to generate solids and/or foams in the liquid; and
(iv) removing the solids and/or foams generated in step (iii).

A further aspect of the invention is directed to the use of the device of the invention in any of its particular embodiments to treat an aqueous liquid such as wastewater; preferably industrial wastewater, domestic wastewater or storm wastewater; more preferably wastewater comprising organic contaminants.

These aspects and preferred embodiments thereof are additionally also defined hereinafter in the detailed description and in the claims.

### BRIEF DESCRIPTION OF THE FIGURES

To better understand the invention, its objects and advantages, the following figures are attached to the specification in which the following is depicted:
**Figure 1** is a picture of the electrolytic cell used in the electrocoagulation experiment of preparative example 1, showing an aluminium disk anode (2), two graphite sheets acting as cathode (4) and a hose having a nozzle that acts as projection means (5).
**Figure 2** is a curve showing the kinetics of flocs sedimentation under the treatment according to preparative example 1.
**Figure 3** shows the electrocoagulation cell assembly according to preparative example 1, before the electrocoagulation experiment (top) and after 3 hours of electrocoagulation experiment (bottom).
**Figure 4** shows images of an experimental prototype device according to the present invention that was used in example 3 for an electrocoagulation-electrooxidation treatment of a washing tunnel wastewater: (a) full prototype; (b) coplanar anodes; (c) cathode with aperture.
**Figure 5** is a sketch of the experimental prototype device for a washing tunnel wastewater disinfection of example 3: (a) cross section of anodes; (b) cross section of cathode; and (c) side view of full prototype.
**Figure 6** shows images of milk (simulated wastewater) (a) before and (b) after the electrocoagulation-electrooxidation treatment of example 4 (followed by 24 h sedimentation); (c) before and (d) after the electrocoagulation and subsequent electrooxidation treatment of comparative example 5 (followed by 24 h sedimentation); and (e) before and (f) after the electrocoagulation-electrooxidation treatment without recirculation of comparative example 6. The insert in Figure 6 (f) shows the sacrificial anode after the treatment of comparative example 6.

### DETAILED DESCRIPTION OF THE INVENTION

Unless defined otherwise, all technical and scientific terms and expressions used herein have the same meaning as commonly understood to one of ordinary skill in the art to which this disclosure belongs. As used herein, the singular forms "a" "an" and "the" include plural reference unless the context clearly dictates otherwise.

### Device

In a first aspect, the invention is directed to a device (1) comprising:
- a first anode (2) comprising a sacrificial-electrode material and a second anode (3) comprising a dimensionally stable material, wherein the first and second anodes are coplanar;
- a cathode (4),
- projection means (5) configured for projecting a liquid jet towards the first anode (2) surface; and
- connection means (8) configured for electrically connecting the two anodes (2 and 3) and the cathode (4) to a power source.

In a particular embodiment, the device of the present invention is an electrochemical cell.

The device of the present invention comprises two anodes: a first anode comprising a sacrificial-electrode material and a second anode comprising a dimensionally stable material. The first and second anodes of the device are coplanar, i.e. each of the anodes have at least a planar surface, and the planar surface of the first anode is on the same plane as the planar surface of the second anode.

In an embodiment, the first and second anodes are concentrically disposed; wherein the first anode is surrounded by the second anode. In another embodiment, the first and second anodes share a symmetry axis that passes through their symmetry center and is perpendicular to their planar surface.

In a particular embodiment, the first and second coplanar anodes and the cathode are facing each other.

In a more particular embodiment, the first anode has a cylindrical shape; preferably it has a right circular cylindrical shape; more preferably the first anode is a cylinder having a thickness enough to maintain coplanarity with the second anode during operation. In a more particular embodiment, the first anode has a disc shape.

In a more particular embodiment, the second anode has a ring shape; preferably wherein the ring has an external diameter that is between 1.1 and 3 times larger than the inner diameter; preferably between 1.2 and 2 times; more preferably about 1.6 times.

In a particular embodiment, the first anode is a cylinder and the second anode is a ring that surrounds the first anode cylinder; preferably the first anode is a disc and the second anode is a ring that surrounds the first anode disc.

In the context of the present invention the expression "sacrificial-electrode material" is understood as commonly used in the art, that is, an electrochemically oxidizable or reducible material via a reduction/oxidation (i.e., redox) reaction while working as an electrode. Thus, when referring to the first anode, the term "sacrificial" means that the material is electrochemically oxidizable during the normal functioning of the device. In a particular embodiment, the sacrificial-electrode material of the first anode is a metal or a metal alloy; preferably the sacrificial-electrode material is selected from the group consisting of Zn, Fe, Al and mixtures thereof; more preferably the sacrificial-electrode material is selected from the group consisting of Fe, Al and a mixture thereof; even more preferably is Al.

In a particular embodiment, the first anode consists of a sacrificial-electrode material.

In the context of the present invention the expression "dimensionally stable material" is understood as a material that has the ability to maintain its essential or original dimensions while working as an electrode, that is, that the material does not react (it is not consumed) during the normal functioning of the device.

In a particular embodiment, the dimensionally stable material is selected from metal, metal oxides, carbon-based materials and mixtures thereof; preferably selected from Pt, RuO₂, IrO₂, PbO₂, SnO₂, boron-doped diamond, carbon nanotubes, graphite, and mixtures thereof; more preferably is graphite; even more preferably is laminated graphite.

In a particular embodiment, the second anode and/or the cathode comprise a dimensionally stable material.

In another particular embodiment, the second anode and/or the cathode consist of a dimensionally stable material.

In an embodiment, the cathode of the device of the present invention comprises an aperture. In an embodiment, the cathode has a ring shape; preferably wherein the aperture is the circular aperture of the ring.

In a more particular embodiment, the aperture of the cathode has a smaller area than the area of the sacrificial-electrode surface; preferably than the area of the sacrificial-electrode planar surface.

In an embodiment, the coplanar anodes and the cathode of the device of the invention are facing each other. In an embodiment, the coplanar anodes are parallel to the cathode. In a more particular embodiment, the surface of the coplanar anodes facing the surface of the cathode, is parallel to the surface of the cathode. In a particular embodiment, the surface of the coplanar anodes and the surface of the cathode that are facing each other are planar. In an embodiment, the coplanar anodes and the cathode share a symmetry axis W-W' that passes through their symmetry center.

In a particular embodiment, the coplanar anodes and the cathode of the device are separated a distance of at least 1 cm; preferably of at least 2 cm; more preferably of at least 3 cm.

The device of the invention comprises projection means configured for projecting a liquid jet towards the first anode surface, particularly at an incidence angle of between 45 and 135°; preferably at an incidence angle of between 60 and 120°; more preferably at an incidence angle of between 80 and 110°; more preferably at an incidence angle of about 90°.

In an embodiment, the cathode (4) comprises an aperture (9) and the projection means (5) are configured for projecting a liquid jet through said aperture (9) towards the first anode (2) surface.

In the context of the present invention, the "incidence angle" is understood as the angle formed between the liquid jet and the first anode surface.

In a particular embodiment, the projection means comprise a jet tube; preferably a pump in fluidic connection with a jet tube. In a particular embodiment the pump is adapted to work externally or under immersion. In an embodiment, the jet tube is configured for fitting the aperture of the cathode. The jet tube may be provided with a nozzle at its end. In a more particular embodiment, the jet tube is a hose. In a particular embodiment, the jet tube length ranges from 1 to 10 times the diameter of the aperture of the cathode, preferably about 5 times the diameter of the aperture of the cathode.

In a particular embodiment, the diameter of the area of the sacrificial-electrode planar surface is less than 2.8 the inner diameter of the jet tube.

In a particular embodiment, the coplanar anodes and the cathode of the device are separated a distance of between 0.5 and 3 times the inner diameter of the jet tube.

The device of the present invention comprises connection means configured for electrically connecting the two anodes and the cathode to a power source (optionally with at least two output channels); such as electric wires, clips or brackets. In particular, the connection means are configured for electrically connecting independently each of the two anodes and the cathode to a power source; preferably with a direct current (DC) power source; more preferably with a direct current (DC) dual output power source.

In an embodiment, the device of the present invention comprises holding means; preferably holding means configured for modifying the distance between the anodes and the cathode such as threaded guides.

In an embodiment, the device of the present invention comprises a power source; preferably a direct current (DC) power source; more preferably a direct current (DC) dual output power source.

In an embodiment, the device of the present invention comprises a holding frame.

In an embodiment, the anodes and/or the cathodes are surrounded by a holding frame. In a more particular embodiment, the holding means are attached to the holding frame.

In an embodiment, the holding frame is made of a non-conducting material.

In an embodiment, the device further comprises a tank adapted for holding the liquid to be treated, for example wastewater.

In another particular embodiment, the device further comprises an external case.

In an embodiment, the invention is directed to a device comprising or consisting of:
- a first anode comprising a sacrificial-electrode material and a second anode comprising a dimensionally stable material, wherein the first and second anodes are coplanar;
- a cathode comprising an aperture,
- projection means configured for projecting a liquid jet through the aperture of the cathode towards the first anode surface at an incidence angle of between 45 and 135°; and
- connection means configured for electrically connecting the two anodes and the cathode to a power source; preferably a direct current (DC) dual output power source; and
- holding means; preferably holding means configured for modifying the distance between the anodes and the cathode;
   wherein the coplanar anodes and the cathode are facing each other and optionally, wherein the coplanar anodes and the cathode share a symmetry axis that passes through their symmetry center.

The authors of the present invention have observed that the device of the invention in any of its particular embodiments was able to perform electrocoagulation and electrooxidation at the same time, in a single step. In addition, it was observed that the use of the device of the present example ensures a clean surface of the first anode during the whole process, reducing the decontamination time. Moreover, the device of the present invention may be advantageously designed to be compact and easily transportable.

### Method

A second aspect of the invention is directed to a method for reducing the contaminants of an aqueous liquid comprising the following steps:
(i) providing
   - the device of the invention (1) in any of its particular embodiments; and
   - an aqueous liquid comprising contaminants;
(ii) measuring the conductivity of the aqueous liquid comprising contaminants, and if necessary, adjusting the conductivity value to be over 1.5 mS/cm;
(iii) contacting the anodes (2 and 3) and the cathode (4) of the device of step (i) with the aqueous liquid comprising contaminants of step (i), and
   applying an electrical current between the anodes (2 and 3) and the cathode (4) of the device while projecting said liquid as a jet towards the sacrificial-electrode material anode (2) planar surface of the device, during at least a period of time calculated by dividing the volume of liquid to be treated between the jet flow rate used to generate solids and/or foams in the liquid; and
(iv) removing solids and/or foams generated in step (iii).

The liquid to be treated (i.e. cleaned or decontaminated) is an aqueous liquid which is to be generally understood as any liquid comprising water. In a particular embodiment, the aqueous liquid comprising contaminants is water comprising contaminants; preferably is wastewater; more preferably is industrial wastewater, domestic wastewater or storm wastewater; even much more preferably is industrial wastewater such as meat industry wastewater. In another particular embodiment the liquid comprising contaminants is water comprising organic contaminants.

In an embodiment, the liquid comprising contaminants has an initial pH of between 5 and 9; preferably between 6 and 8; more preferably about 7.

### Step (ii)

In an embodiment, the conductivity of the liquid comprising contaminants is measured by a conductivimeter. The conductivity of the liquid comprising contaminants can be adjusted by adjusting the ion concentration of the liquid by any method known in the art, for example, by adding a salt. In a particular embodiment, the conductivity value of the liquid is adjusted by adding a salt; preferably by adding an alkaline salt, more preferably a sulphate, carbonate, nitrate, halide or hydroxide salt, even more preferably NaCl, KCI, CaCl₂, NaOH, KOH, CaCO₃, K₂SO₄ or Na₂SO₄, most preferably NaCl or Na₂SO₄.

The conductivity value is over 1.5, preferably at least or over 1.6, 1.7, 1.8 or 1.9 mS/cm; more preferably at least or over 2, 2.1, 2.2, 2.3, 2.4, 2.5 or 2.6 mS/cm; or even more preferably at least or over 2.7 mS/cm in certain instances.

In an embodiment, the conductivity value is between 2 mS/cm and 10 mS/cm; more preferably between 2 mS/cm and 3 mS/cm.

Advantageously, the claimed method may be carried out without the addition of any further or external oxidant agent such as hydrogen peroxide.

### Step (iii)

The contact of the anodes and the cathode of the device with the aqueous liquid comprising contaminants may be performed by submerging the anodes and the cathode or the whole device in the liquid.

In a particular embodiment, a current density of between 2 and 10 mA/cm² is applied to the first anode; preferably between 3 and 9 mA/cm²; more preferably between 6 and 8 mA/cm²; much more preferably about 7 mA/cm².

In a particular embodiment, a current density of between 0.1 and 5 mA/cm² is applied to the second anode; preferably between 0.5 and 4 mA/cm²; more preferably between 1 and 3 mA/cm²; much more preferably about 2 mA/cm².

In a particular embodiment, the liquid is projected as a jet towards the sacrificial-electrode material anode planar surface of the device at an incidence angle of between 45-135°; preferably an incidence angle of between 60 and 120°; more preferably at an incidence angle of between 80 and 110°; more preferably at an incidence angle of about 90°.

In an embodiment, the cathode (4) comprises an aperture (9) and the projection means (5) are configured for projecting a liquid jet through the aperture (9) of the cathode (4) towards the sacrificial-electrode material anode planar surface of the device.

The liquid jet is preferably a water jet but other liquids are also contemplated.

In a particular embodiment, the liquid is projected with a linear velocity of at least 0.01 m/s; preferably at least 0.05; more preferably at least 0.10 m/s.

In a particular embodiment, the liquid is projected with a linear velocity of between 0.01 and 10 m/s; preferably of between 0.05 and 8 m/s; more preferably of between 0.10 and 6 m/s.

In an embodiment, step (iii) is performed during at least a period of time calculated by dividing the volume of liquid to be treated between the volumetric flow rate of the jet. For instance, if a flow rate of 2000 L/h is used for reducing the contaminants of a liquid having a volume of 2,000 L, electrical current in step (iii) should be preferably applied during at least 1 h. Typically, a time equal to from 2 to 80 times, or from 2 to 40 times, or from 2 to 20 times, or from 2 to 10 times, the volume to be treated over the flow rate should be enough for treatment. A high volumetric flow rate may be employed for reducing the time needed for cleaning the liquid. In a particular embodiment, step (iii) preferably lasts at least 10 minutes; more preferably at least 15 minutes; even much more preferably between 20 and 300 minutes, or between 20 and 150 min or between 20 and 60 min.

In an embodiment, step (iii) is performed at a temperature of between 10°C and 35°C.

In an embodiment, step (iii) is performed at a pH of between 5 and 9; preferably between 6 and 8; more preferably about 7.

In an embodiment, the electrical current applied is continuous.

### Step (iv)

Step (iv) is directed to removing the solids and/or foams generated in step (iii); preferably mechanically or chemically removing the solids and/or foams generated in step (iii); more preferably by mechanically dragging the foams such as by skimming, by using an overflow system, by blowing them or by a mixed method thereof.

In a particular embodiment, steps (iii) and/or (iv) are repeated one or more times; preferably are repeated until the amount of contaminants in the aqueous liquid comprising contaminants is reduced in at least a 10 % of the original amount of contaminants; preferably in at least a 20%; more preferably in at least a 30%, 40%, 50% or 60%; much more preferably in at least a 70%, 80% or 90%; even much more preferably in at least a 95%.

In a particular embodiment, steps (iii) and/or (iv) are repeated; preferably are repeated until the Nephelometric Turbidity Unit (NTU) values of the liquid are reduced in at least a 30% of the original value of the liquid of step (i); wherein the NTU was measured using a Turbidimeter; preferably in at least a 40, 50 or a 60% of the original value.

### Uses

Use of the device of the invention (1) in any of its particular embodiments to treat a liquid comprising water such as wastewater; preferably industrial wastewater, domestic wastewater or storm wastewater; more preferably industrial wastewater; much more preferably food industry wastewater; even more preferably meat industry wastewater.

It should be understood that the scope of the present disclosure includes all the possible combinations of embodiments disclosed herein.

The following examples are merely illustrative of certain embodiments of the invention and cannot be considered as restricting it in any way.

### EXAMPLES

The invention is illustrated by means of the following examples that in no case limit the scope of the invention.

### Example 1. Electrocoagulation experiment (Preparative)

An electrocoagulation experiment with wastewater was performed using an electrocoagulation cell.

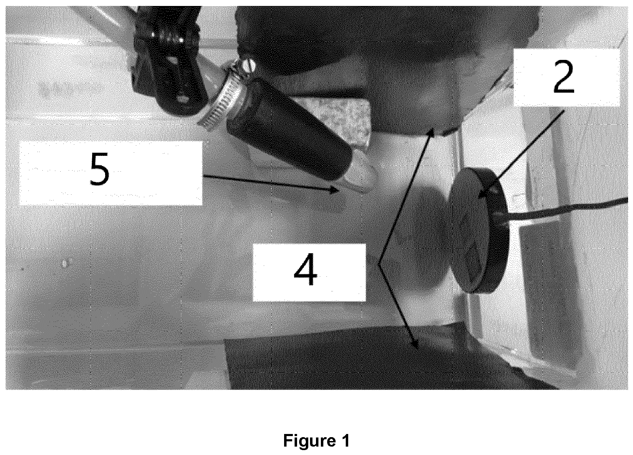

In the electrocoagulation cell set-up, a 99.5% pure aluminium disc (AI-1050) of 8.5 cm diameter and 3 cm of thickness was used as anode (sacrificing electrode) and two graphite sheets having 10 x 10 cm dimensions as cathode. The graphite cathodes had a rectangular sheet shape and were placed facing each other. The anode disk was placed between the cathodes and perpendicular to each of the cathodes (see Fig. 1). The distance from the center point of said side of the anode disk to the center point of each of the cathodes was about 10 cm.

Wastewater from the prewashing stage of a washing tunnel of a meat industry facility was used in the experiments. The wastewater before any treatment had the following characteristics:
- a turbidity value of 242 NTU,
- a conductivity value of 20 µS/cm,
- a chemical oxygen demand (COD) value of 1098 mg O₂/L, and
- a pH value of 7.

The turbidity of the wastewater was measured by an ISO 1027 compliant turbiditymeter Palintest PTH092 (Turbimeter Plus) instrument. The conductivity was measured by a EC-Metro GLP 31 (Crison Instruments) conductivimeter. The pH was measured by a pH BASIC 20 (Crison Instruments) pH-meter. The COD value of the wastewater was measured by the Titrimetric Method 5220 C. Closed Reflux, (Standard Method: "5220 CHEMICAL OXYGEN DEMAND (COD)", Standard Methods For the Examination of Water and Wastewater. DOI: 10.2105/SMWW.2882.103)

Before each experiment, the conductivity of the wastewater was adjusted by adding the necessary amount of Na₂SO₄. A minimum value of a conductivity value is needed to ensure correct electric conductivity within the wastewater and thus, a correct operation of the device. Low conductivity values require high operation voltages which leads to energy loss due to unwanted solution heating. In the present experiment, the conductivity value was adjusted to be at least 2.7 mS/cm.

### 1.1. Electrocoagulation

The object of this experiment was to determine the current density that is effective to dissolve the sacrificial anode.

Several electrocoagulation tests were performed on wastewater using the set-up described above and varying the applied current density relative to the anode between 5 and 15 mA/cm². In each test, the electrodes (cathode and anode) were totally immersed in a 10 L tank of wastewater. An electric current was applied between the anode and the cathode. A pump operating at a flow rate of 3800 L/h was used to recirculate wastewater between the tanks. Moreover, wastewater was projected against the surface of the aluminium anode disk at a 3800 L/h using a hose perpendicular to said surface.

Results showed that the highest faradaic efficiency was obtained for current densities of 7-10 mA/cm². In addition, the authors of the present invention observed that by projecting the wastewater directly against the surface of the sacrificial anode during electrocoagulation, the thickness of the anode boundary layer was reduced and flocs formation was promoted. It was also observed that this feature prevented both the deposition of organic matter on the anode surface and anode passivation, which would result in a non-constant current flow.

### 1.2 Electrocoagulation vs time

An additional electrocoagulation experiment was performed with the same set-up applying a current density of 7 mA/cm² on a wastewater during 3 h. Nephelometric Turbidity Unit (NTU) values were measured each 30 minutes during the first 3 h, then a sample of the treated water was allowed to rest for sedimentation for 24 h, where turbidity was determined again. Nephelometric Turbidity Unit (NTU) was measured using a Palintest PTH092 (Turbidimeter Plus) equipment.

The wastewater before the treatment had the following characteristics:
- a turbidity value of 800 NTU;
- a conductivity value of 2700 µS/cm;
- a chemical oxygen demand (COD) value of 710 mg O₂/L; and
- a pH value of 7.

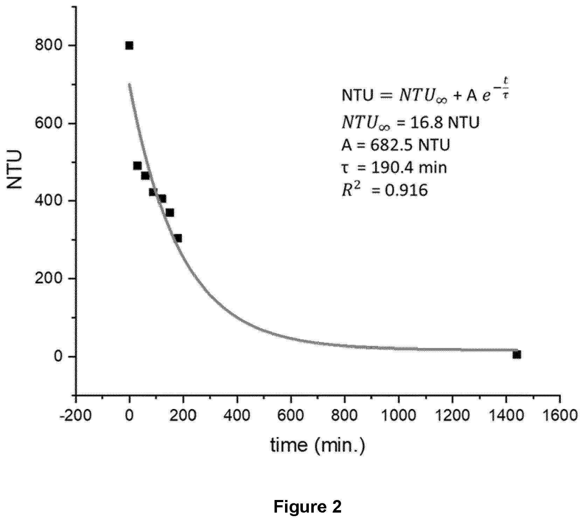

Figure 2 displays NTU data vs time during the electrocoagulation experiment on wastewater. Results of Figure 2 are showed in Table 1 where the % of turbidity reduction relates to the initial turbidity of the non-treated wastewater. In addition, after 180 minutes a turbidity reduction slightly over 60% was observed. After resting up to 24 h, values of about 99.35 % of turbidity reduction were obtained.

**Table 1. Wastewater turbidity reduction per time of electrocoagulation.**

| **Time** | **0'** | **30'** | **60'** | **90'** | **120'** | **150'** | **180'** | **24h (rest)** |
|---|---|---|---|---|---|---|---|---|
| NTU | 800 | 490 | 465 | 423 | 406 | 370 | 304 | 5.2 |
| Turbidity reduction (%) | 0 | 38.75 | 41.87 | 47.12 | 49.25 | 53.75 | 62 | 99.35 |

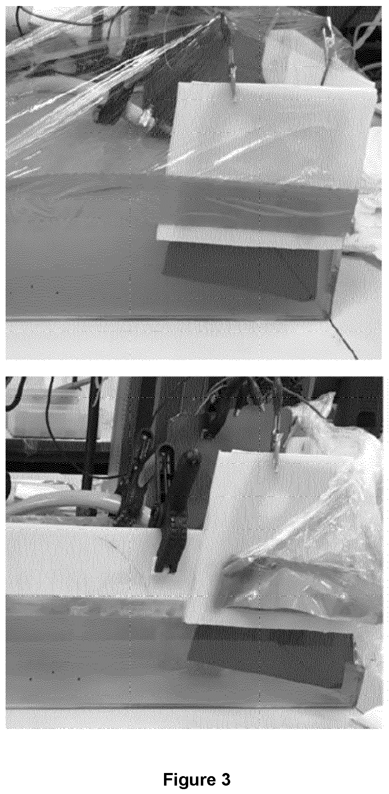

Figure 3 contains pictures showing the turbidity of the wastewater before (top figure) and after (bottom figure) performing the electrocoagulation.

An electrochemical yield of 72.5% was obtained. The electrochemical yield was calculated as follows: y= (Electric charge necessary to dissolving the amount of Al dissolved)/ (electric charge passed). The electric charge equivalent of Al dissolved as Al³⁺ is 12.42 Ah/kg. Thus, the current density of 7 mA/cm² was effective to dissolve aluminium of the anode (sacrificing electrode). The remaining 27.5% of the current goes essentially to water electrolysis as H⁺ and O₂.

Flocs formed during the experiment were removed by decantation after sludge deposition or by mechanical dragging on the surface (flotation) depending on their size. Once the suspension was settled after electrocoagulation, flocs of smaller size were decanted and removed. In addition, formation of foams during electrocoagulation was observed. The foams were removed by mechanical dragging. Results showed that about one third of flocculated organic matter was sedimented and two thirds formed foams. In addition, after electrocoagulation, the pH of the wastewater increased in 1.5 units from a pH value of 7 at the start of the experiment to 8.5 due to an excess of OH⁻ anions production at the cathode. A COD value of 96 mg O₂/L was obtained for the wastewater after suffering the electrocoagulation process described above.

Thus, the COD value reached by the electrochemical method described above was way below the minimum COD value allowed by the Galician regulation, *DECRETO 141*/*2012, de 21 de junio de 2012 (Reglamento marco del Servicio Público de Saneamiento y Depuración de Aguas Residuales de Galicia).*

### Example 2. Electrooxidation experiment (Preparative)

The object of this experiment was a disinfection of the previously electrocoagulated wastewater through the electro-generation of reactive oxygen-containing species.

Wastewater obtained after 180 min of the electrocoagulation treatment and sedimentation of experiment in example 1.2 above mixed with some of the sediment organic matter, was further treated. The wastewater before de electrooxidation had the following characteristics:
- a turbidity value of 330 NTU;
- a conductivity value of 3000 µS/cm;
- a chemical oxygen demand (COD) value of 96 mg O₂/L; and
- a pH value of 8.5.

The electrochemical configuration and experimental conditions of the electrocoagulation experiment described on example 1 were maintained for this experiment. However, the aluminium anode was replaced by a laminated graphite anode having the same geometry.

10 L of the wastewater obtained after the electrocoagulation process of Example 1 were treated by applying an intensity of 113 mA on a surface of 57 cm². The electrochemical experiment was carried out during at least 2 hours by applying a current density of approximately 2 mA/cm².

A turbidity reduction of 97% was observed in the treated wastewater after 180 minutes of treatment with respect to the initial wastewater used in the present experiment as described above. In addition, the COD value obtained was 55 mg O₂/L, which is under the minimum threshold allowed under the applicable law.

### Example 3. One-step electrocoagulation-oxidation treatment experiment

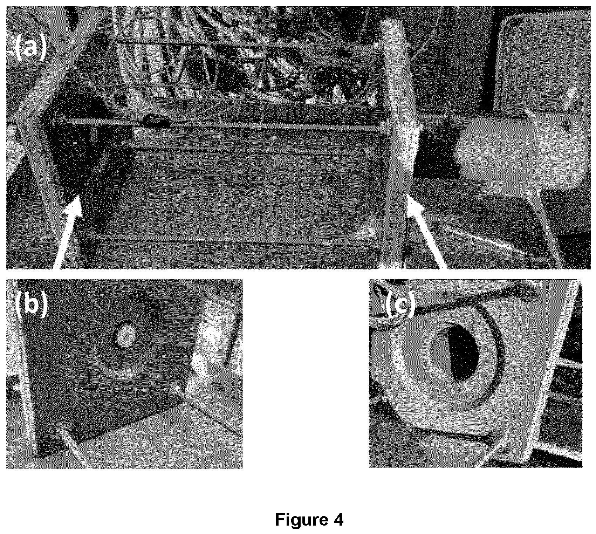

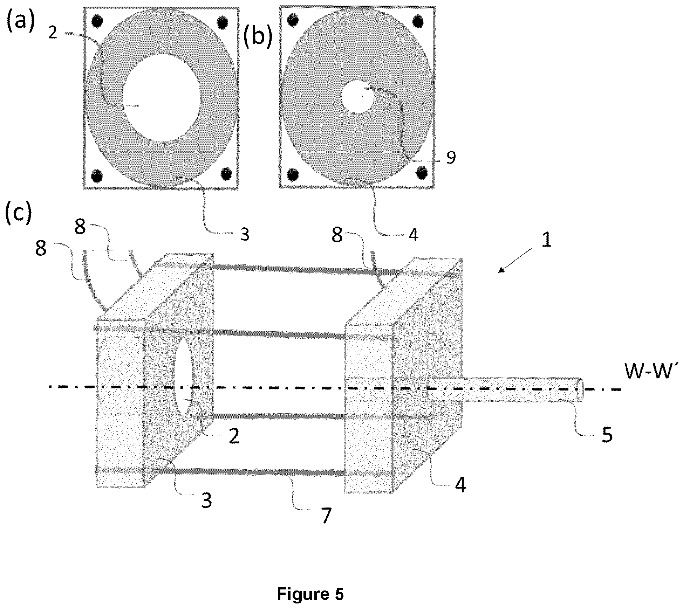

An electrocoagulation-oxidation device was fabricated to carry out the electrocoagulation and electrooxidation methods described above simultaneously. Figures 4 and 5 show the electrocoagulation-oxidation device.

The anode of the electrocoagulation-oxidation device was a double anode: An aluminium disc as the one employed in Example 1 (99.5% pure aluminium disc (AI-1050)) with a 8.5 cm diameter which acts as a sacrificial anode, encircled by a laminated and dimensionally stable graphite ring having a 9 cm internal diameter and a 14.5 cm external diameter. The aluminium disk provides the Al³⁺ necessary for the coagulation process, and the graphite ring provides the oxygen-rich species necessary for the oxidation process. Both anodes had differentiated electrical connections allowing to set the specific current densities.

The cathode was a laminated graphite ring having a 4 cm internal diameter and a 14.5 cm external diameter. In the device, the anode and the cathode face each other (Figure 4a), sharing a symmetry axis that passes through their center. The center of the cathode graphite ring hosted a nozzle (Figure 4c) to project the wastewater against the sacrificial anode, perpendicularly to the sacrificial anode surface (Figure 4b). The electrodes had flanges to provide the necessary electrical connection to the negative pole of the power source. In addition, the electrocoagulation-oxidation device had means to adjust the distance between the anode and cathode, said distance ranging between about 2 and 5 cm. The authors of the invention observed that that distance is suitable for an easy evacuation of the fluid while allows maintaining the aluminium surface free of deposits.

Figure 5 shows a sketch of cross-section of the (a) anodes and (b) cathode and of a side view of the device (1). The coplanar aluminium (2) and graphite (3) anodes, the graphite cathode (4) with an aperture (9) with a nozzle, holding frames surrounding the anodes and the cathode, screw drivers (7) to adjust the distance between the anodes and the cathode, independent electrical connections (8) to each of the graphite and aluminium anodes, an electrical connection to the cathode (8) common ground, and the jet tube or hose (5) can be seen on Figure 5.

Wastewater from the prewashing stage of a washing tunnel of a meat industry facility was used in the experiments. The wastewater before any treatment had the following characteristics:
- a turbidity value of 242 NTU;
- a conductivity value of 20 µS/cm;
- a chemical oxygen demand (COD) value of 1098 mg O₂/L; and
- a pH value of 7.

First, the conductivity of the wastewater was adjusted to about 2.7 mS/cm. Conductivity value of the wastewater of at least 2.7 mS/cm is advisable to ensure correct electric conductivity within the wastewater and thus, a correct operation of the device.

The electrocoagulation-oxidation device was tested by submerging it in the untreated wastewater. Then, a continuous current of 400 mA was applied on the sacrificial aluminium anode and 200 mA on the inert graphite anode during 30 min. The inert graphite anode received a current density of approximately 2 mA/cm² and the sacrificial aluminium anode received a current density of approximately 7 mA/cm².

The turbidity of the initial wastewater was reduced from 242 NTU to 92 NTU (62% reduction) after just 30 min of treatment. In addition, the COD value obtained was 55 mg O₂/L.

Consequently, the results showed that the device was able to electrocoagulate and oxidize the wastewater at the same time. The laminated graphite ring acted as the anode for the electrooxidation process and the aluminium disk was the sacrificial electrode for the electrocoagulation process. In addition, it was observed that the use of the device of the present example ensures a clean exposed aluminium surface during the whole process, which leads to an efficient Al³⁺ functioning as a coagulant, reducing the wastewater cleaning time. In a different set-up, the presence of deposits on the aluminium surface would block direct access to Al³⁺ to the suspended particles and would hence inhibit the process of flocs formation.

### Example 4. One-step electrocoagulation-oxidation treatment experiment

A further one-step electrocoagulation-oxidation experiment was carried out using regular cow milk (1 L) diluted in water (34 L) as a simulated wastewater (total volume 35 L). This type of wastewater is a homogeneous suspension containing a high fraction of organic matter in solution, contrary to the wastewater of the meat sector (example 3) wherein the main part of organic matter is in the form of suspended particles. The initial turbidity value is above >1050 NTU due to the white color of the milk reflecting all the light. In addition, NaCl of 1 M concentration was added to ensure a conductivity value of at least 2 mS/cm. The wastewater before the experiment had the following characteristics:
- a turbidity value of >1050 NTU;
- a conductivity value of 2900 µS/cm;
- a chemical oxygen demand (COD) value of 2640 mg O₂/L; and
- a pH value of 6.3.

The anode of the electrocoagulation-oxidation device was a double anode composed of a 99.5% pure aluminium disc (AI-1050) with a 8.5 cm diameter as a sacrificial anode and a graphite sheet with a 10 x 10 cm area as a dimensionally stable anode. Both anodes had differentiated electrical connections allowing to set the specific current densities, as above specified in Example 3.

The cathode was a laminated graphite sheet having a 10x10 cm area.

The experiment started by submerging the electrocoagulation-oxidation device in the untreated wastewater and a continuous current was applied during 180 min. The inert graphite anode received a current density of approximately 2 mA/cm² and the sacrificial aluminium anode received a current density of approximately 7 mA/cm². During the treatment, wastewater was projected against the sacrificial anode. The flow rate of the pump used to project the wastewater was approximately 840 L/h, which corresponds to a linear speed on the anode of 5.4 m/s.

Table 2 shows the results of different samples of treated wastewater after treating it as described above with the electrocoagulation-oxidation device for up to 3 h (180 minutes) followed by a sedimentation step.

The turbidity of the initial wastewater was above the measurement threshold >1050 NTU and remained above said limit throughout the treatment. The results of pH and conductivity were constant. After the simultaneous electrocoagulation and electro-oxidation treatment test, the wastewater was allowed to settle down during 24 hours.

Table 2 results showed that the NTU turbidity values were reduced with increasing sedimentation time. The turbidity reduction achieved is of about >89% reduction of the initial value after 24 hours of sedimentation, considering the initial turbidity value the 1050 threshold. It is worth highlighting that most of the turbidity reduction, over 83% reduction of the initial value, was achieved after only one hour of sedimentation.

The initial COD value was reduced from 2640 to 2496 mg O₂/L after 180 min of treatment (>5% reduction) and further reduced to 984 mg O₂/L after a subsequent 24 h sedimentation, meaning a 63% reduction from the initial value after the whole treatment.

**Table 2. Wastewater turbidity reduction per time.**

| | Treatment | | | | Sedimentation | | | | | | |
|---|---|---|---|---|---|---|---|---|---|---|---|
| **t (h)** | 0 | 1 | 2 | 3 | 1 | 2 | 3 | 4 | 5 | 6 | 24 |
| **NTU** | >1050 | >1050 | >1050 | >1050 | 179 | 148 | 133 | 129 | 119 | 117 | 115 |

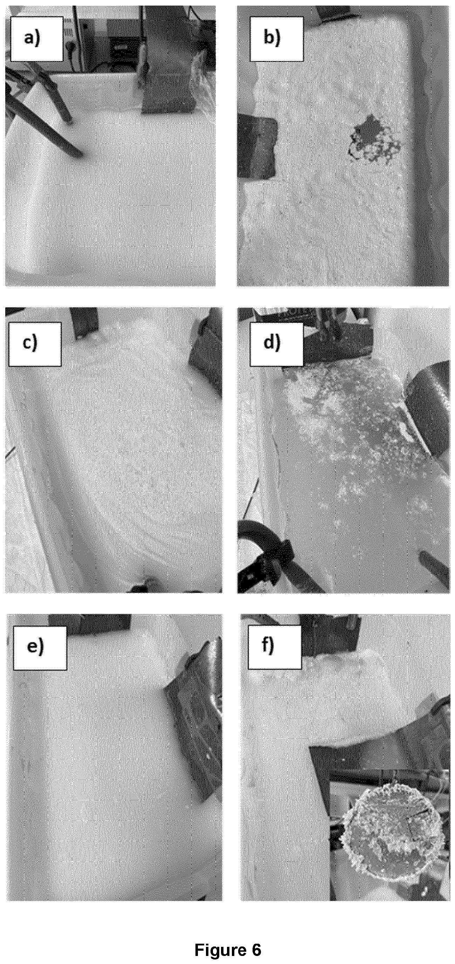

Figures 6(a) and (b) show images of milk (simulated wastewater) before and after the electrocoagulation-electrooxidation treatment of example 4 (followed by 24 h sedimentation).

### Comparative example 5. Two-step electrocoagulation and electro-oxidation experiment

A comparative two-step experiment comprising an electrocoagulation step followed by an electrooxidation step, was carried out using regular cow milk (1 L) diluted in water (34 L) as initial wastewater (>1050 NTU) (the same wastewater as in Example 4). In addition, NaCl of 1 M concentration was added to ensure a conductivity value of at least 2 mS/cm. The wastewater before any treatment had the following characteristics:
- a turbidity value of >1050 NTU;
- a conductivity value of 2900 µS/cm;
- a chemical oxygen demand (COD) value of 2432 mg O₂/L; and
- a pH value of 6.8.

The experiment conditions of the electrocoagulation step of the two-step experiment comprising an electrocoagulation step followed by an electrooxidation were as follows: The anode was a 99.5% pure aluminium disc (Al-1050)) with a 8.5 cm diameter. The cathode was a laminated graphite sheet having a 10 x 10 cm area. The intensity applied during the 180 minutes of testing was 7 mA/cm². During the treatment, wastewater was projected against the sacrificial anode. The flow rate of the pump used to project the wastewater was approximately 840 L/h, which resulted in a linear speed on the anode of 5.4 m/s.

During the electrocoagulation step, all evaluated parameters of the wastewater remained stable during the treatment. Initial and final chemical oxygen demand (COD) (after three hours of experiment) were measured, observing a 1.6% reduction in COD. The turbidity remained constant above the measurable threshold.

Once the 180 minutes of electrocoagulation treatment were elapsed, the electrode configuration was changed and the electro-oxidation treatment step was started immediately.

For this electro-oxidation step, the conditions were as follows: The anode and the cathode were laminated graphite sheets of 10x10 cm. The intensity applied during the 180 minutes was 2 mA/cm². The flow rate of the pump was approximately 840 L/h, which resulted in a linear speed on the anode of 5.4 m/s.

A further 30% reduction in COD with respect to the previous step was obtained after three hours of electro-oxidation treatment. It must be noted that the final COD value of the previous electrocoagulation stage was considered as initial COD value of this electro-oxidation stage since the treatment was carried out sequentially. The turbidity remained constant above the measurable threshold.

Subsequent sedimentation was allowed for up to 24 additional hours to favor the precipitation of the previously formed flocs.

The turbidity reduction after one hour of sedimentation was >67% of the initial value and after 24 hours of sedimentation >75% reduction in turbidity of the treated wastewater was achieved. After the 24 hours of sedimentation, the total COD was reduced in 68%.

Figures 6(c) and (d) show images of milk (simulated wastewater) before and after the electrocoagulation and subsequent electrooxidation treatment of comparative example 5 (followed by 24 h sedimentation).

The results of this comparative example 5 vs example 4 showed that the one-step experiment performed in example 4 reaches better turbidity values than the ones obtained with the two-step treatment of the present example. In addition, an additional advantage of example 4 is that the total time is reduced in 3 h for the one-step experiment.

### Comparative example 6. One-step electrocoagulation-electrooxidation experiment without projected jet

The wastewater and experimental conditions applied for this experiment were the same as those described for example 4, except that no wastewater recirculation pump was used, thus, in this experiment no recirculated wastewater jet was projected directly to the sacrificial anode.

After 180 min of simultaneous electrocoagulation-oxidation and even after a further step of 24 h of sedimentation, no noticeable improvement was observed in any of the parameters studied of the treated wastewater. Figures 6(e) and (f) show images of milk (simulated wastewater) before and after the electrocoagulation-electrooxidation treatment without recirculation of comparative example 6. In addition, it was found that a crust developed on the surface of the sacrificial anode, which rendered it unusable (see insert in Figure 6f).

The results of experiment **4** and comparative examples **5-6** are summarized in Table 3 below:

**Table 3. Summary of chemical oxygen demand (COD) and turbidity (NTU) results.**

| | Example | **4** | **5** | **6** |
|---|---|---|---|---|
| **COD** | Initial | 2640 | 2432 | 2592 |
| | Final (after 24 h sedimentation) | 984 | 768 | 2592 |
| | % Reduction | **63%** | **68%** | **0%** |
| **NTU** | Initial | >1050 | >1050 | >1050 |
| | End of treatment* | 179 | 331 | >1050 |
| | % Treatment reduction* | **83%** | **68%** | **0%** |
| | Final (after 24 h sedimentation) | 115 | 261 | >1050 |
| | % Global reduction | **89%** | **75%** | **0%** |
| *values after treatment followed by 1 h sedimentation. | | | | |

The overall reduction in chemical oxygen demand (COD) was similar for the one-step hybrid treatment of experiment 4 (electrocoagulation-oxidation) and for the two-step separate treatment of experiment 5 (electrocoagulation followed by electro-oxidation). However, it must be noted that in example 5, the effective oxidation time is not limited to the 3 hours of electro-oxidation, since a certain degree of organic matter oxidation occurs previously during the previous 3 h electrocoagulation stage due to parallel reactions taking place such as the formation of hydrogen peroxide and oxygen. Thus, an additional advantage of example 4 is that the total time is reduced in 3 h for the one-step experiment of example 5.

The lowest global turbidity for the treated wastewater was obtained in the one-step treatment of experiment 4 where electrocoagulation and electro-oxidation were performed simultaneously, with a remarkably substantial reduction in turbidity of 83% after 180 min of electrocoagulation-oxidation experiment followed by just one hour of sedimentation.

Finally, it is worth to point out the significantly advantageous effect of recirculating the wastewater by a jet being projected directly to the sacrificial anode during the one-step treatment.

## Claims

1. A device (1) comprising:
- a first anode (2) comprising a sacrificial-electrode material and a second anode (3) comprising a dimensionally stable material, wherein the first and second anodes are coplanar;
- a cathode (4);
- projection means (5) configured for projecting a liquid jet towards the first anode (2) surface; and
- connection means (8) configured for electrically connecting the two anodes (2 and 3) and the cathode (4) to a power source.

2. The device according to claim 1, wherein the coplanar anodes (2 and 3) and the cathode (4) are facing each other.

3. The device according to any one of claims 1 or 2, wherein the cathode (4) comprises an aperture (9) and the projection means (5) are configured for projecting a liquid jet through the aperture (9) of the cathode (4) towards the first anode (2) surface; preferably at an incidence angle of about 90°.

4. The device according to any one of claims 1 to 3, wherein the sacrificial-electrode material is a metal or a metal alloy; preferably the sacrificial-electrode material is selected from Zn, Fe, Al or a mixture thereof; more preferably Al.

5. The device according to any one of the previous claims, wherein the aperture (9) of the cathode (4) has a smaller area than the area of the first anode (2) surface.

6. The device according to any one of the previous claims, wherein the first and second anodes (2 and 3) are concentrically disposed; and wherein the first anode (2) is surrounded by the second anode (3).

7. The device according to any one of the previous claims, wherein the second anode (3) and/or the cathode (4) comprises a dimensionally stable electrode material selected from metal, metal oxides, carbon-based materials and mixtures thereof; preferably selected from Pt, RuO₂, IrO₂, PbO₂, SnO₂, boron-doped diamond, carbon nanotubes, graphite, and mixtures thereof; more preferably graphite.

8. The device according to any one of the previous claims, wherein the projection means (5) comprise a pump in fluidic connection with a jet tube, preferably a jet tube with a length ranging from 1 to 10 times the diameter of the aperture (9) of the cathode (4), more preferably 5 times the diameter of the aperture (9)..

9. A method for reducing the contaminants of an aqueous liquid comprising the following steps:
(i) providing
- the device (1) as defined on any of claims 1 to 8; and
- an aqueous liquid comprising contaminants;
(ii) measuring the conductivity of the aqueous liquid comprising contaminants, and if necessary adjusting the conductivity value to be over 1.5 mS/cm;
(iii) contacting the anodes (2 and 3) and the cathode (4) of the device of step (i) with the aqueous liquid comprising contaminants of step (i), and
applying an electrical current between the anodes (2 and 3) and the cathode (4) of the device while projecting said liquid as a jet towards the sacrificial-electrode material anode (2) planar surface of the device, during at least a period of time calculated by dividing the volume of liquid to be treated between the jet flow rate used to generate solids and/or foams in the liquid; and
(iv) removing the solids and/or foams generated in step (iii).

10. The method according to claim 9, wherein the liquid jet is projected with a linear velocity of between 0.01 and 10 m/s.

11. The method according to any one of claims 9 or 10, wherein the aqueous liquid comprising contaminants is wastewater.

12. The method according to any one of claims 9-11, wherein the current density applied to the first anode (2) is between 2 and 10 mA/cm² and wherein the current density applied to the second anode (3) is between 0.1 and 5 mA/cm².

13. The method according to any one of claims 9 to 12, wherein step (iv) comprises a step of removing solids by decantation and/or removing foams by mechanically dragging the foams such as by skimming.

14. Use of the device (1) described in any one of claims 1 to 8 to treat an aqueous liquid, preferably wastewater.

15. Use according to claim 14, wherein the wastewater is industrial wastewater; preferably food industry wastewater; more preferably meat industry wastewater.
